# EUROPÄISCHE PATENTSCHRIFT

(11) **EP 2 829 713 B1**
(45) Veröffentlichungstag und Bekanntmachung des Hinweises auf die Patenterteilung: **07.11.2018**
(21) Anmeldenummer: 14174726.1
(22) Anmeldetag: 27.06.2014
(51) Int. Cl.: F02F 1/08, F16J 10/04

(54) **Werkstück mit einer Ausnehmung zur Aufnahme eines Kolbens**
Workpiece with a recess for holding a piston
Pièce usinée dotée d'un évidement pour la réception d'un piston

(30) Priorität: 26.07.2013 EP 13178145
(43) Veröffentlichungstag der Anmeldung: 28.01.2015
(73) Patentinhaber: Sulzer Metco AG, 5610 Wohlen (CH)
(72) Erfinder: Ernst, Peter Dr., 8174 Stadel b. Niederglatt (CH); Distler, Bernd, Marshall Street, 1409 (US)
(74) Vertreter: Intellectual Property Services GmbH

(56) Entgegenhaltungen:
- JP-A- H01 155 061
- US-A- 6 044 820
- US-A1- 2007 143 996
- US-A1- 2013 047 947
- US-A1- 2013 129 939

## Beschreibung

Die Erfindung betrifft ein Werkstück mit einer Ausnehmung zur Aufnahme eines Kolbens gemäß dem Oberbegriff des Anspruchs 1.

In der US 2007/0143996 A1 wird ein derartiges Werkstück beschrieben.

In der EP 1 022 351 A1 wird ein Werkstück in Form eines Motorblocks bzw. eines Kurbelgehäuses eines Verbrennungsmotors beschrieben, welches mehrere Ausnehmungen zur Aufnahme eines entlang einer axialen Richtung hin- und her beweglichen Kolbens aufweist. Die Ausnehmungen in Form der Zylinder weisen eine Beschichtung auf, welche eine Lauffläche für den Kolben bildet, wobei die Lauffläche hohlzylinderförmig ausgeführt ist. Die Beschichtung wird aufgebracht, um einen möglichst geringen Reibungskoeffizienten zwischen Kolben und Zylinder und ausserdem eine sehr geringe Neigung zum Scuffing ("Fressen") zu erreichen.

Neben den genannten Wirkungen der Beschichtung beeinflusst diese auch einen Wärmeaustausch zwischen dem Zylinder und einem den Zylinder umströmenden Kühlmittel. Je dicker die Beschichtung ausgeführt ist, desto geringer ist üblicherweise der genannte Wärmeaustausch. Mit Wahl der Dicke der Beschichtung kann so der Wärmeaustausch beeinflusst werden.

Demgegenüber ist es insbesondere die Aufgabe der Erfindung, ein Werkstück mit einer Ausnehmung zur Aufnahme eines Kolbens vorzuschlagen, bei welchem ein gewünschter Wärmeübergang von Bereichen der Ausnehmung in eine Umgebung des Werkstücks besonders genau eingestellt werden kann. Erfindungsgemäß wird diese Aufgabe mit einem Werkstück mit den Merkmalen des Anspruchs 1 gelöst.

Das erfindungsgemässe Werkstück verfügt über einen Grundkörper, der eine Ausnehmung zur Aufnahme eines entlang einer axialen Richtung hin- und her beweglichen Kolbens aufweist. Die Ausnehmung verfügt über eine Beschichtung, welche eine Lauffläche für den Kolben bildet. Die Lauffläche ist dabei hohlzylinderförmig ausgeführt.

Die Ausnehmung des Grundkörpers im Bereich der Lauffläche weist eine von einer hohlzylindrischen Form abweichende Form auf. Da die Lauffläche für den Kolben hohlzylinderförmig ausgeführt ist, ergibt sich im Bereich der Lauffläche eine unterschiedliche Dicke der Beschichtung. Die Ausnehmung weist damit in jedem Fall in dem axialen Bereich, in dem sich der Kolben hin- und her bewegt, eine von einer hohlzylindrischen Form abweichende Form auf. Damit kann durch eine geeignete Wahl der Kontur der Ausnehmung und damit der Dicke der Beschichtung für jeden Bereich der Ausnehmung ein optimaler Wärmeübergang eingestellt werden.

Ausserdem kann die Beschichtung in Bereichen mit erhöhtem Verschleiss dicker ausgeführt werden.

Erfindungsgemäss weist die Beschichtung eine erste Schicht und eine zweite Schicht auf, wobei die erste Schicht zumindest abschnittsweise über der zweiten Schicht angeordnet ist. Die beiden Schichten weisen dabei unterschiedliche Eigenschaften auf und bestehen insbesondere aus verschiedenen Materialien. Beispielsweise ist zwischen der ersten Schicht, welche die Lauffläche bildet, und dem Grundkörper eine zweite Schicht in Form einer Wärmedämmschicht angeordnet. Die Wärmedämmschicht kann dabei im gesamten Bereich der Lauffläche für den Kolben oder nur in einem oder mehreren Teilbereichen davon ausgebildet sein. Beispielsweise kann die Wärmedämmschicht nur innerhalb der oben genannten Einschnitte ausgebildet sein. Das Material der zweiten Schicht kann auch so gewählt werden, dass sich ein erhöhter Wärmeübergang ergibt. Die zweite Schicht kann auch als eine so genannte Haftschicht ausgeführt sein, die eine besonders starke Verbindung zwischen dem Werkstück und der ersten Schicht ermöglicht. Auch die Haftschicht kann einen Einfluss auf den Wärmeübergang haben.

Durch das Vorsehen der zweiten Schicht und insbesondere einer Wärmedämmschicht kann der Wärmeübergang von der Ausnehmung zur Umgebung besonders genau eingestellt werden.

Die Beschichtung kann auch mehr als zwei, also beispielsweise drei oder vier verschiedene Schichten aufweisen.

Das genannte Werkstück ist insbesondere als ein Motorblock bzw. ein Kurbelgehäuse aus einer Aluminium- oder Magnesium-Legierung oder aus Gusseisen oder als eine Zylinderlaufbüchse insbesondere aus Gusseisen für einen Verbrennungsmotor ausgeführt.

Da die Lauffläche für den späteren Betrieb des Werkstücks nach dem Aufbringen der Beschichtung nicht genau die erforderlichen Abmessungen aufweist, wird die Lauffläche für den Kolben nachbearbeitet, insbesondere gehont.

Die Beschichtung kann beispielsweise als eine eisenhaltige Schicht ausgeführt sein, wie sie in der EP 1 022 351 A1 der Anmelderin beschrieben ist. Die Schicht kann beispielsweise auch aus einem Material bestehen, wie es in der EP 1 507 020 A2 oder EP 1 174 524 A2 der Anmelderin beschrieben ist. Darüber hinaus sind natürlich weitere geeignete Materialien für die Beschichtung denkbar.

Die Dicke der Schicht kann insbesondere zwischen 30 µm und ca. 2 mm betragen, wobei die Schicht abgesehen von Übergangsbereichen insbesondere nur zwei verschiedene Dicken aufweist. Zum einen einen ersten Bereich mit einer dünnen Beschichtung mit einer ersten Dicke von 30 bis 200 µm und zum anderen einen zweiten Bereich mit einer dicken Beschichtung mit einer zweiten Dicke von 0.5 - 2 mm. Damit ist der Wärmeübergang zu einem das Werkstück umströmenden Kühlmittels im zweiten Bereich deutlich anders, insbesondere geringer als im ersten Bereich. Ob sich der Wärmeübergang im zweiten Bereich verringert oder erhöht, hängt dabei von der Wärmeleitfähigkeit des Materials der Beschichtung im Vergleich zur Wärmeleitfähigkeit des Materials des Werkstücks ab. Ist die Wärmeleitfähigkeit des Materials der Beschichtung kleiner als die Wärmeleitfähigkeit des Materials des Werkstücks so verringert sich der Wärmeübergang im zweiten Bereich. Im anderen Fall erhöht sich der Wärmeübergang.

Erfindungsgemäss weist die Ausnehmung des Grundkörpers eine hohlzylinderförmige Grundform und wenigsten einen Einschnitt in radialer Richtung auf. Abgesehen von einem Übergangsbereich an einem Rand oder an Rändern in axialer Richtung kann der Einschnitt insbesondere eine gleiche Tiefe in radialer Richtung aufweisen. Der Übergangsbereich kann insbesondere als eine Schräge, eine Fase, ein Radius oder eine Kombination von verschiedenen Radien ausgeführt sein. Der Einschnitt kann am Rand der Ausnehmung oder auch beabstanded vom Rand angeordnet sein. Die Ausnehmung kann in axialer Richtung einen oder auch mehrere Einschnitte aufweisen. Damit kann die Ausnehmung des Grundkörpers einfach hergestellt werden.

Der oder die Einschnitte sind vollständig umlaufend und damit kreisringförmig ausgeführt. Damit können sie besonders einfach hergestellt werden. Die Beschichtung wird insbesondere mittels eines rotierenden Plasmabrenners aufgebracht, der in die Ausnehmung eingeführt wird. Es ist auch möglich, dass ein stehender Brenner in Verbindung mit einem rotierenden Grundkörper verwendet wird. Ist ein Einschnitt vollständig umlaufend ausgeführt, so kann zuerst nur in dem Einschnitt eine Beschichtung aufgebracht werden und wenn diese gefüllt ist, die Beschichtung auf die gesamten Ausnehmung ausgedehnt werden. Damit muss bei der Herstellung der Beschichtung nicht zunächst Material aufgebracht werden, das in einem späteren Arbeitsschritt wieder abgetragen werden muss. Die ermöglicht eine schnelle und kostengünstige Herstellung des Werkstücks.

Ausserdem kann bei Ausführung des Werkstücks als eine Zylinderlaufbuchse diese symmetrisch bezüglich ihrer Längsachse ausgeführt werden, was einen besonders einfachen Einbau der Zylinderlaufbüchse in einen Motorblock bzw. ein Kurbelgehäuse ermöglicht.

In Ausgestaltung der Erfindung ist der Einschnitt unterschiedlich tief ausgeführt, wobei sich die Tiefe auf die radiale Ausdehnung des Einschnitts ausserhalb der oben genannten Übergangsbereiche bezieht. Insbesondere weist der Einschnitt eine Vertiefung auf, welche in einem axialen Randbereich des Einschnitts angeordnet ist. Unter einem axialen Randbereich des Einschnitts ist ein Bereich zu verstehen, der sich an einen der genannten Übergangsbereiche anschliesst. Um beim Aufbringen der Beschichtung mit möglichst wenig Material auszukommen, ist es sinnvoll die Beschichtung nicht immer über die gesamte axiale Ausdehnung der Ausnehmung aufzubringen, sondern lokal begrenzt nur im Bereich des Einschnitts. Damit muss der Plasmabrenner innerhalb der Ausnehmung und zwar in den genannten axialen Randbereichen des Einschnitts umkehren. Dies hat zur Folge, dass sich im Bereich der Umkehrpunkte und damit in den Randbereichen mehr Material aufgetragen wird als ausserhalb der Randbereiche. Wenn die Ausnehmung eine konstante Tiefe aufweist, so muss dieses Material in den Randbereichen bei einer Nacharbeitung wieder abgetragen werden. Weist der Einschnitt hingegen in den Randbereichen eine Vertiefung auf, so kann das zusätzliche Material zumindest teilweise in der Vertiefung aufgenommen werden, was einen geringeren Aufwand und damit eine kostengünstige Nachbearbeitung möglich macht.

Der Einschnitt kann am Rand der Ausnehmung oder innerhalb der Ausnehmung angeordnet sein. Bei der Anordnung am Rand der Ausnehmung weist der Einschnitt insbesondere nur an dem dem Rand der Ausnehmung gegenüber liegenden Übergangsbereich eine Vertiefung auf. Im anderen Fall weist er insbesondere an beiden Übergangsbereichen jeweils eine Vertiefung auf.

In Ausgestaltung der Erfindung weist der Einschnitt eine Tiefe zwischen 0.5 und 2 mm und eine Höhe in axialer Richtung zwischen 5 und 50 mm auf.

In Ausgestaltung der Erfindung bildet nur die erste Schicht die Lauffläche für den Kolben. Damit ist im gesamten Bereich der Lauffläche die zweite Schicht zwischen der ersten Schicht und dem Werkstück angeordnet.

Die oben beschriebenen Vertiefungen an Randbereichen des Einschnitts sind insbesondere dann vorteilhaft, wenn die Beschichtung zwei Schichten aufweist und nur die erste Schicht die Lauffläche für den Kolben bilden soll. Ohne die genannten Vertiefungen besteht die Gefahr, dass bei der Nachbearbeitung in den Randbereichen des Einschnitts so viel Material abgetragen werden muss, dass die erste Schicht unzulässig dünn wird oder sogar die zweite Schicht nicht mehr überdeckt. Dann würde es zu einem unerwünschten oder sogar unzulässigen Kontakt des Kolbens mit der zweiten Schicht kommen. Die genannten Vertiefungen ermöglichen es damit, dass auch in diesem Fall die gewünschte Beschichtung sicher hergestellt werden kann.

In Ausgestaltung der Erfindung bildet im Bereich des Einschnitts die erste Schicht und ansonsten die zweite Schicht die Lauffläche. Dies wird insbesondere so realisiert, dass zuerst die zweite Schicht mit einer konstanten Dicke und anschliessend über die zweite Schicht die erste Schicht aufgetragen wird. Die Schichten folgen damit der Kontur des Einschnitts. Bei der Nachbearbeitung der Lauffläche, also insbesondere beim Honen wird eine Bearbeitungsebene und damit die Position und Kontur der Lauffläche so festgelegt, dass in gewünschten Bereichen in der Umgebung des Einschnitts die erste Schicht und ansonsten die zweite Schicht die Lauffläche bildet. Damit kann auf einfache und kostengünstige Weise eine Lauffläche mit abschnittsweise unterschiedlichen Eigenschaften zur Verfügung gestellt werden.

Die zweite Schicht kann beispielsweise aus einem zähen metallischen Material mit hoher Lebensdauer bestehen, während die erste Schicht beispielsweise einen keramischen Charakter aufweisen kann. Der keramische Charakter hat Vorteile bei der Reibungsreduktion. Die erste Schicht kann auch als eine metallische Schichtausgeführt sein, welche mit einem im Vergleich zur zweiten Schicht gröberen Pulver mit einer Partikelgrösse von ca. 30-60 µm hergestellt wird, was üblicherweise zu einer höheren Oberflächenporosität führt. Die erhöhte Oberflächenporosität kann einen Kolbenring des Kolbens dabei unterstützen, einen Zustand einer so genannten hydrodynamischen Schmierung schneller zu erreichen oder beispielsweise die Neigung zum Scuffing ("Fressen") reduzieren.

Die Wärmedämmschicht besteht insbesondere aus einem Keramikmaterial. Sie kann beispielsweise aus einem Pulver hergestellt werden, das aus 75 Gewichtsprozent Zirkoniumoxid (ZrO₂), zwischen 18 und 22 Gewichtsprozent Yttriumoxid (Y₂O₃) und weiteren Oxiden als Rest besteht. Ein derartiges Pulver wird von der Anmelderin unter der Verkaufsbezeichnung "Metco 202NS" vertrieben. Die Wärmedämmschicht weist beispielsweise eine Dicke zwischen 0.5 und 2 mm auf. Damit kann in den Bereichen mit einer Wärmedämmschicht ein besonders geringer Wärmeübergang von der Ausnehmung zur Umgebung erreicht werden.

Die zweite Schicht kann auch aus einem anderen geeigneten Material bestehen, wie beispielsweise aus einer Legierung aus Eisen oder Kobalt und/oder Nickel, sowie Chrom, Aluminium und Yttrium, welche als so genannte MCrAlY-Legierungen bezeichnet werden. Derartige Legierungen werden häufig als Haftschichten genutzt.

Die Beschichtung kann auch mehr als zwei unterschiedliche Schichten mit unterschiedlichen Eigenschaften und/oder Zusammensetzungen aufweisen.

In Ausgestaltung der Erfindung ist die Beschichtung mittels eines thermischen Spritzverfahrens, insbesondere mittels eines Plasma-Spritzverfahrens aufgebracht. Damit lässt sich die Beschichtung besonders kostengünstig aufbringen. Ausserdem kann damit eine besonders widerstandsfähige Beschichtung aufgebracht werden.

Das Aufbringen der Beschichtung wird insbesondere mittels eines Plasmaspritzverfahrens bei Atmosphärendruck durchgeführt, also mittels eines so genannten APS- Beschichtungsverfahrens. Damit lässt sich eine hochwertige Beschichtung besonders kostengünstig herstellen. Das Beschichtungsmaterial kann beispielsweise in Pulverform vorliegen. Dabei kann die Partikelgrösse des zwischen 5 und 90 µm betragen.

Es sind aber auch andere thermische Beschichtungsverfahren, wie beispielsweise Hochgeschwindigkeitsflammspritzen oder Lichtbogenspritzen einsetzbar.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: einen Ausschnitt eines Kurbelgehäuses mit zwei innenbeschichteten Zylindern,
- Fig. 2: eine Schnittdarstellung einer innenbeschichteten Zylinderlaufbüchse,
- Fig. 3: einen Ausschnitt einer Zylinderlaufbüchse mit einer zweischichtigen Beschichtung in einem ersten Ausführungsbeispiel,
- Fig. 4: einen Ausschnitt einer Zylinderlaufbüchse mit einer zweischichtigen Beschichtung in einem zweiten Ausführungsbeispiel,
- Fig. 5: einen Ausschnitt einer Zylinderlaufbüchse mit einer zweischichtigen Beschichtung in einem dritten Ausführungsbeispiel,
- Fig. 6: einen Ausschnitt einer Zylinderlaufbüchse mit einer einschichtigen Beschichtung in einem zweiten Ausführungsbeispiel,
- Fig. 7: einen Ausschnitt einer Zylinderlaufbüchse mit einer zweischichtigen Beschichtung in einem vierten Ausführungsbeispiel,
- Fig. 8: einen Ausschnitt einer Zylinderlaufbüchse entsprechend Fig. 7 mit einer im Vergleich dazu anders ausgeführten zweischichtigen Beschichtung
- Fig. 9: einen Ausschnitt einer Zylinderlaufbüchse mit einer zweischichtigen Beschichtung in einem fünften Ausführungsbeispiel.

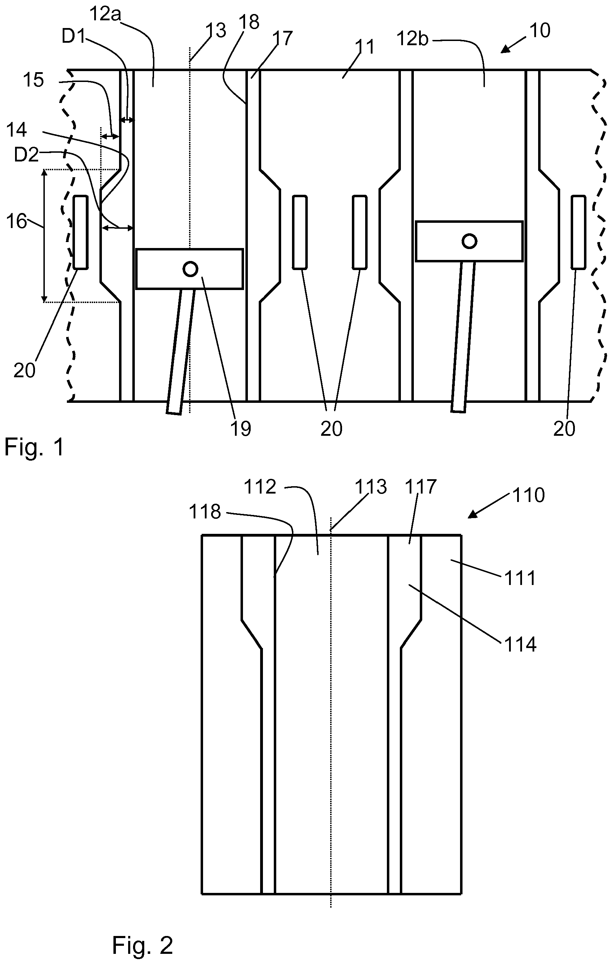

In Fig. 1 ist ein Ausschnitt eines als ein Kurbelgehäuse 10 eines nicht weiter dargestellten Verbrennungsmotors ausgeführten Werkstücks dargestellt. Das Kurbelgehäuse 10 ist nicht massstäblich und nur sehr schematisch dargestellt. Insbesondere sind die hier relevanten Teile stark vergrössert dargestellt.

Das Kurbelgehäuse 10 besteht aus Aluminium und verfügt über einen Grundkörper 11, welcher insgesamt vier Ausnehmungen in Form von Zylindern aufweist, von denen allerdings nur zwei Ausnehmungen 12a, 12b dargestellt sind. Die beiden dargestellten Ausnehmungen 12a, 12b sind identisch ausgeführt, weshalb die Beschreibungen für beide Ausnehmungen 12a, 12b gleichermassen gelten.

Die Ausnehmungen 12a, 12b weisen eine hohlzylinderförmige Grundform auf, die bezüglich einer axialen Richtung 13 einen ungefähr mittig angeordneten, nach aussen und damit in radialer Richtung gerichteten Einschnitt 14 aufweist. Damit ergibt sich, dass die Ausnehmung 12a, 12b des Grundkörpers 11 eine von einer hohlzylindrischen Form abweichende Form aufweist. Der Einschnitt 14 ist vollständig umlaufend ausgeführt und weist damit einen kreisringförmigen Querschnitt auf. Übergänge von der hohlzylinderförmigen Grundform zum Einschnitt 14 sind jeweils als eine Schräge ausgeführt. Der Einschnitt 14 weist gegenüber der hohlzylinderförmigen Grundform eine Tiefe 15 in radialer Richtung von 0.5 bis 2 mm, also beispielsweise 1 mm auf. Eine Höhe 16 des Einschnitts 14 beträgt zwischen 5 und 50 mm, also beispielsweise 20 mm, wobei ein Durchmesser der hohlzylinderförmigen Grundform beispielsweise 80 mm betragen kann. Die Höhe 16 der Ausnehmung 14 wird dabei als die axiale Ausdehnung des von der hohlzylinderförmigen Grundform abweichenden Bereichs angesehen.

Die Ausnehmung 12a, 12b weist eine Beschichtung 17 auf, welche eine Lauffläche 18 für einen innerhalb der Ausnehmung 12a, 12b angeordneten Kolben 19 bildet. Die Lauffläche 18 ist hohlzylinderförmig ausgeführt und der Kolben 19 kann sich auf bekannte Weise innerhalb der Ausnehmung 12a, 12b in axialer Richtung 13 bewegen. Der Kolben 19 bewegt sich dabei im Betrieb des Verbrennungsmotors über den Einschnitt 14 hinweg. Die Beschichtung 17 ist mit einem APS-Plasma-Spritzverfahren aufgebracht und anschliessend mit einem Honverfahren nachbearbeitet worden. Die Beschichtung 17 wird mit einem eisenhaltigen Material hergestellt, wie es in der EP 1 022 351 A1 der Anmelderin beschrieben ist.. Beim Aufbringen der Beschichtung 17 wird zunächst die Beschichtung 17 innerhalb der gesamten Ausnehmung 12a, 12b aufgebracht. Wenn ausserhalb des Einschnittes 14 eine ausreichende Schichtdicke erreicht ist, wird gezielt nur im Bereich des Einschnittes 14 weiter beschichtet.

Es kann aber auch zunächst nur eine Beschichtung innerhalb des Einschnittes aufgebracht werden und erst wenn dieser gefüllt ist, auch ausserhalb des Einschnittes. Eine weitere Möglichkeit besteht darin, während des gesamten Beschichtungsvorgangs innerhalb der gesamten Ausnehmung eine so dicke Beschichtung aufzubringen, dass bei einer Nacharbeitung eine hohlzylindrische Lauffläche entstehen kann.

Durch die Kombination aus einer hohlzylinderförmigen Lauffläche 18 und der von einer hohlzylindrischen Form abweichenden Form der Ausnehmung 12a, 12b ergibt sich eine nicht gleichmässige Dicke der Beschichtung 17 in radialer Richtung. Die Beschichtung 17 ist zwar an einer bestimmten axialen Position ringsherum gleich dick, allerdings kann die Dicke an einer anderen axialen Position anders sein.

In axialer Richtung 13 ausserhalb des Einschnitts 14 weist die Beschichtung 17 eine ersten Dicke D1 von 100 bis 200 µm , also beispielsweise 150 µm auf. Über die Schrägen des Einschnitts 14 steigt die Dicke bis zu einer maximalen zweite Dicke D2 von 0.5 - 2 mm, also beispielsweise 1 mm an.

Der Grundkörper 11 des Kurbelgehäuses 10 weist ausserdem Kühlmittelkanäle 20 auf, in welchen im Betrieb des Verbrennungsmotors ein Kühlmittel zirkuliert und Wärme vom Kurbelgehäuse 10 weg transportiert. Die Kühlmittelkanäle 20 verlaufen um die Ausnehmungen 12a, 12b herum und sind im Bereich des Einschnitts 14 angeordnet.

In Fig. 2 ist ein als eine Zylinderlaufbüchse 110 ausgeführtes Werkstück dargestellt. Die Zylinderlaufbüchse 110 ist dafür vorgesehen, in ein nicht dargestelltes Kurbelgehäuse eines Verbrennungsmotors eingesetzt zu werden. Die Zylinderlaufbüchse 110 ist nicht massstäblich und nur sehr schematisch dargestellt. Insbesondere sind die hier relevanten Teile stark vergrössert dargestellt.

Die Zylinderlaufbüchse 110 besteht aus Gusseisen und verfügt über einen Grundkörper 111, welcher eine Ausnehmung 112 aufweist. Die Ausnehmung 112 weist eine hohlzylinderförmige Grundform auf, die bezüglich einer axialen Richtung 113 am Rand einen nach aussen und damit in radialer Richtung gerichteten Einschnitt 114 aufweist. Damit ergibt sich, dass die Ausnehmung 112 des Grundkörpers 111 eine von einer hohlzylindrischen Form abweichende Form aufweist. Der Einschnitt 114 ist ebenfalls vollständig umlaufend ausgeführt und weist damit einen kreisringförmigen Querschnitt auf. Ein Übergang vom Einschnitt 114 zur hohlzylinderförmigen Grundform ist als eine Schräge ausgeführt. Die Tiefe und die Länge des Einschnitts 114 sind vergleichbar mit denen des Einschnitts 14 aus Fig. 1.

Die Ausnehmung 112 weist eine Beschichtung 117 auf, welche eine hohlzylinderförmige Lauffläche 118 für einen nicht dargestellten, innerhalb der Ausnehmung 112 anordenbaren Kolben bildet. Die Beschichtung 117 ist aus demselben Material und mit demselben Verfahren wie die Beschichtung 17 aus Fig. 1 hergestellt.

Durch die Kombination aus einer hohlzylinderförmigen Lauffläche 118 und der von einer hohlzylindrischen Form abweichenden Form der Ausnehmung 112 ergibt sich eine nicht gleichmässige Dicke der Beschichtung 117 in radialer Richtung. Die Dicke der Beschichtung 117 ist dabei vergleichbar mit der Dicke der Beschichtung 17 aus Fig. 1.

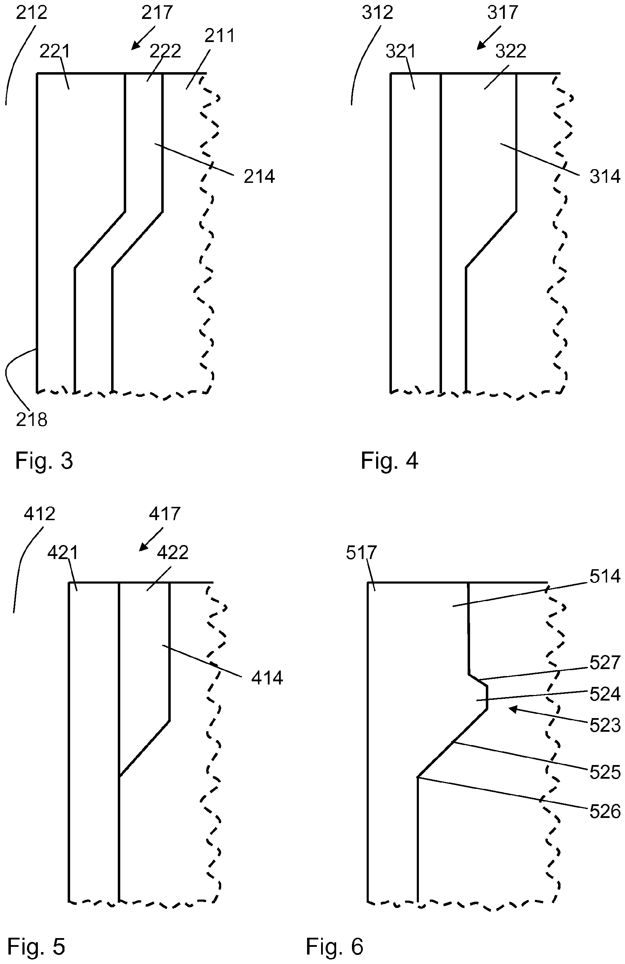

In den Fig. 3, 4 und 5 ist jeweils ein Ausschnitt einer Zylinderlaufbüchse entsprechend Fig. 2 dargestellt. Dabei ist jeweils ein Ausschnitt mit einem Einschnitt einer Ausnehmung dargestellt. Grundkörper und Ausnehmungen in den Fig. 3, 4 und 5 sind identisch ausgeführt. Die Ausführungsbeispiele unterscheiden sich lediglich in der Art der Beschichtung, wobei alle drei Beschichtungen aus zwei unterschiedlichen, übereinander liegenden Schichten bestehen.

Gemäss dem Ausführungsbeispiel entsprechend Fig. 3 weist eine Beschichtung 217 einer Ausnehmung 212 eine erste Schicht 221 auf, welche eine Lauffläche 218 für einen nicht dargestellten Kolben bildet. Die Schicht 221 ist aus demselben Material und mit demselben Verfahren wie die Beschichtung 17 aus Fig. 1 hergestellt. Auch die Dicke der Schicht 217 ist dabei vergleichbar mit der Dicke der Beschichtung 17 aus Fig. 1.

Zwischen der ersten Schicht 221 und einem Grundkörper 211 ist über die komplette axiale Erstreckung eine zweite Schicht in Form einer Wärmedämmschicht 222 angeordnet. Die Wärmedämmschicht 222 besteht aus einem Keramikmaterial und zwar aus einem Pulver, das von der Anmelderin unter der Verkaufsbezeichnung "Metco 202NS" vertrieben wird. Die Wärmedämmschicht weist eine gleichmässige Dicke zwischen 0.5 und 2 mm, also beispielsweise 1 mm auf. Die Wärmedämmschicht 222 wird ebenfalls mittels eines APS-Plasma-Spritzverfahrens aufgebracht.

Damit die Lauffläche 218 hohlzylinderförmig ausgeführt ist, weist die erste Schicht 221 vergleichbar mit der Beschichtung 117 aus Fig. 2 eine sich in axialer Richtung veränderliche Dicke auf. Damit wird ein Einschnitt 214 der Ausnehmung 212 und die gleichmässige Dicke der Wärmedämmschicht 222 ausgeglichen.

Das Ausführungsbeispiel entsprechend Fig. 4 unterscheidet sich nur wenig vom Ausführungsbeispiel gemäss Fig. 3, so dass nur auf die Unterschiede eingegangen wird. Beim Ausführungsbeispiel gemäss Fig. 4 weist ein erste Schicht 321 einer Beschichtung 317 eine gleichmässige Dicke und eine Wärmedämmschicht 322 eine veränderliche Dicke auf. Die Wärmedämmschicht 322 ist so ausgeführt, dass sie einen Einschnitt 314 einer Ausnehmung 312 ausgleicht, so dass die erste Schicht 321 bereits auf eine hohlzylindrische Kontur aufgebracht werden kann.

Das Ausführungsbeispiel entsprechend Fig. 5 unterscheidet sich nur wenig vom Ausführungsbeispiel gemäss Fig. 4, so dass nur auf die Unterschiede eingegangen wird. Beim Ausführungsbeispiel gemäss Fig. 5 ist eine Wärmedämmschicht 422 einer Beschichtung 417 so ausgeführt, dass sie lediglich einen Einschnitt 414 einer Ausnehmung 412 so auffüllt, dass eine hohlzylindrische Kontur entsteht, auf die eine gleichmässig dicke erste Schicht 421 aufgebracht werden kann.

Das Ausführungsbeispiel entsprechend Fig. 6 unterscheidet sich nur wenig vom Ausführungsbeispiel gemäss Fig. 2, so dass nur auf die Unterschiede eingegangen wird. Beim Ausführungsbeispiel gemäss Fig. 6 weist ein Einschnitt 514 eine unterschiedliche Tiefe auf. Der Einschnitt 514 weist in einem axialen Randbereich 523 eine umlaufende Vertiefung 524 auf. Die Vertiefung 524 ist so angeordnet, dass sie über eine konstante Fase 526 mit einem Rand 526 des Einschnitts 514 verbunden ist. Auf der dem Rand 526 gegenüber liegenden Seite weist die Vertiefung 524 ebenfalls eine Fase 527 auf. Die Vertiefung 524 dient dazu, bei einem Aufbringen einer Beschichtung 517 nur im Bereich des Einschnitts 514 Material aufzunehmen, das beim Umkehren eines Plasma-Brenners zusätzlich abgeschieden wird.

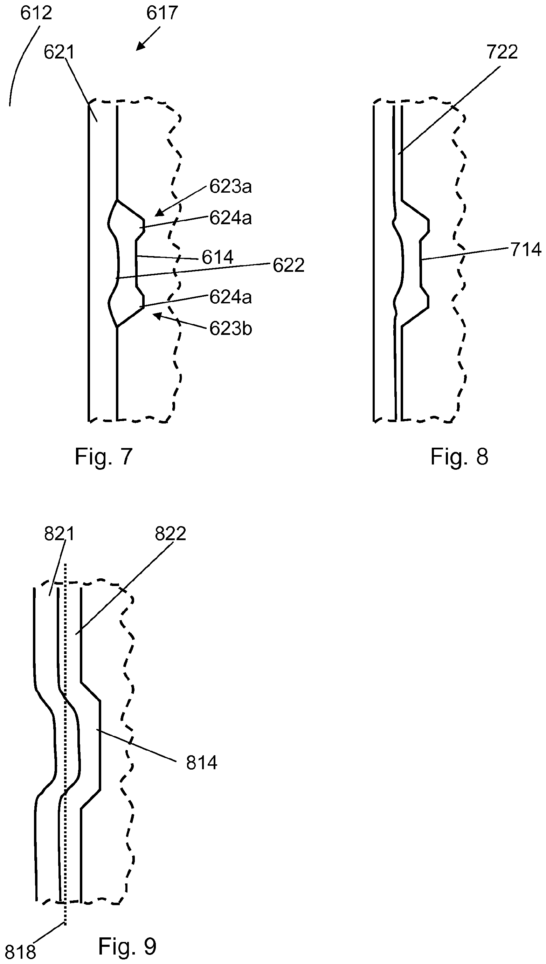

Beim Ausführungsbeispiel entsprechend Fig. 7 weist ein Einschnitt 614 einer Ausnehmung 612 eine mit den Einschnitten 14 gem. Fig. 1 grundsätzlich vergleichbare Anordnung und Kontur auf. Zusätzlich zu diesen weist der Einschnitt 614 an seinen beiden axialen Randbereichen 623a, 623b Vertiefungen 624a, 624b entsprechend der Vertiefung 524 gem. Fig. 6 auf. Eine Beschichtung 617 weist eine erste Schicht 621 und eine zweite Schicht 622 auf, wobei die zweite Schicht 622 nur im Bereich des Einschnitts 614 aufgebracht wurde.

Das Ausführungsbeispiel entsprechend Fig. 8 unterscheidet sich vom Ausführungsbeispiel gemäss Fig. 7 nur dadurch, dass eine zweite Schicht 722 nicht nur im Bereich eines Einschnitts 714 sondern auch ausserhalb davon angeordnet ist.

Das Ausführungsbeispiel entsprechend Fig. 9 unterscheidet sich nur wenig vom Ausführungsbeispiel gemäss Fig. 1, so dass nur auf die Unterschiede eingegangen wird. Ein Einschnitt 814 weist ebenfalls eine konstante Tiefe auf. Es wird zunächst eine zweite Schicht 822 und darüber eine erste Schicht 821 mit einer jeweils annähernd konstanten Dicke aufgebracht. Die beiden Schichten 821, 822 folgen damit weitgehend der Kontur des Einschnitts 814. Bei einer anschliessenden Nachbearbeitung wird eine Bearbeitungsebene so festgelegt, dass in der Umgebung des Einschnitts 814 die erste Schicht 821 und ansonsten die zweite Schicht 822 die Lauffläche 818 bildet.

## Patentansprüche

1. Werkstück mit einem Grundkörper (11, 111, 211), der eine Ausnehmung (12a, 12b, 112, 212, 312, 412, 612) zur Aufnahme eines entlang einer axialen Richtung (13) hin- und her beweglichen Kolbens (19) aufweist, wobei die Ausnehmung (12a, 12b, 112, 212, 312, 412, 612) eine Beschichtung (17, 117, 217, 317, 417, 517, 617) aufweist, welche eine Lauffläche (18, 118, 218, 818) für den Kolben (19) bildet und die Lauffläche (18, 118, 218, 818) hohlzylinderförmig ausgeführt ist, wobei die Ausnehmung (12a, 12b, 112, 212, 312, 412, 612) des Grundkörpers (11, 111, 211) im Bereich der Lauffläche (18, 118, 218, 818) eine von einer hohlzylindrischen Form abweichende Form aufweist, und die Beschichtung (217, 317, 417, 617) eine erste Schicht (221, 321, 421, 621, 821) und eine zweite Schicht (222, 322, 422, 622, 722, 822) aufweist, wobei die erste Schicht (221, 321, 421, 621, 821) zumindest abschnittsweise über der zweiten Schicht (222, 322, 422, 622, 722, 822) angeordnet ist, und die Ausnehmung (12a, 12b, 112, 212, 312, 412, 612) des Grundkörpers (11, 111, 211) eine hohlzylinderförmige Grundform aufweist, **dadurch gekennzeichnet, dass** die Ausnehmung (12a, 12b, 112, 212, 312, 412, 612) des Grundkörpers (11, 111, 211) wenigsten einen Einschnitt (14, 114, 214, 314, 414, 514, 614, 714, 814) in radialer Richtung aufweist, wobei der Einschnitt (14, 114, 214, 314, 414, 514, 614, 714, 814) vollständig umlaufend ausgeführt ist.

2. Werkstück nach Anspruch 1,
**dadurch gekennzeichnet, dass**
der Einschnitt (514, 614, 714) unterschiedlich tief ausgeführt ist.

3. Werkstück nach Anspruch 1 oder 2,
**dadurch gekennzeichnet, dass**
der Einschnitt (514, 614, 714) eine Vertiefung (524, 624a, 624b) aufweist, welche in einem axialen Randbereich (523, 623a, 623b) des Einschnitts (514, 614, 714) angeordnet ist.

4. Werkstück nach einem der vorangehenden Ansprüche,
**dadurch gekennzeichnet, dass**
der Einschnitt (14, 114, 214, 314, 414, 514, 614, 714, 814) eine Tiefe (15) zwischen 0.5 und 2 mm aufweist.

5. Werkstück nach einem der vorangehenden Ansprüche,
**dadurch gekennzeichnet, dass**
der Einschnitt (14, 114, 214, 314, 414, 514, 614, 714, 814) eine Höhe (16) in axialer Richtung zwischen 5 und 50 mm aufweist.

6. Werkstück nach Anspruch 1,
**dadurch gekennzeichnet, dass**
nur die erste Schicht (221, 321, 421, 621) die Lauffläche (218) bildet.

7. Werkstück nach Anspruch 1,
**dadurch gekennzeichnet, dass**
im Bereich des Einschnitts (814) die erste Schicht (821) und ansonsten die zweite Schicht (822) die Lauffläche (818) bildet.

8. Werkstück nach einem der Ansprüche 1, 6 oder 7,
**dadurch gekennzeichnet, dass**
die zweite Schicht (222, 322, 422, 622, 722, 822) aus einem Keramikmaterial besteht.

9. Werkstück nach einem der Ansprüche 1, 6, 7 oder 8,
**dadurch gekennzeichnet, dass**
die zweite Schicht (222, 322, 422, 622, 722, 822) eine Dicke zwischen 0.5 und 2 mm aufweist.

10. Werkstück nach einem der Ansprüche 1 bis 9,
**dadurch gekennzeichnet, dass**
die Beschichtung (17, 117, 217, 317, 417, 517, 617) mittels eines thermischen Spritzverfahrens aufgebracht ist.

11. Werkstück nach Anspruch 10,
**dadurch gekennzeichnet, dass**
die Beschichtung (17, 117, 217, 317, 417, 517, 617) mittels eines Plasma-Spritzverfahrens aufgebracht ist.

## Claims

1. A workpiece with a base body (11, 111, 211) having a recess (12a, 12b, 112, 212, 312, 412, 612) for receiving a reciprocating piston (19) along an axial direction (13), wherein the recess (12a, 12b, 112, 212, 312, 412, 612) has a coating (17, 117, 217, 317, 417, 517, 617), which forms a running surface (18, 118, 218, 818) for the piston (19) and the running surface (18, 118, 218, 818) is hollow cylinder-shaped, wherein the recess (12a, 12b, 112, 212, 312, 412, 612) of the base body (11, 111, 211) has a shape which differs from a hollow cylindrical shape in the area of the running surface (18, 118, 218, 818) and wherein the coating (217, 317, 417, 617) has a first layer (221, 321, 421, 621, 821) and a second layer (222, 322, 422, 622, 722, 822), wherein the first layer (221, 321, 421, 621, 821) is arranged above the second layer (222, 322, 422, 622, 722, 822) at least in sections and the recess (12a, 12b, 112, 212, 312, 412, 612) of the base body (11, 111, 211) has a hollow cylindrical basic shape, **characterized in that** the recess (12a, 12b, 112, 212, 312, 412, 612) of the base body (11, 111, 211) has at least one incision (14, 114, 214, 314,414, 514, 614, 714, 814) in the radial direction, wherein the incision (14, 114, 214,314,414, 514, 614,714,814) is completely circumferential.

2. A workpiece according to claim 1, **characterized in that** the incision (514, 614, 714) is of different depths.

3. A workpiece according to claim 1 or 2, **characterized in that** the incision (514, 614, 714) has a deepening (524, 624a, 624b), which is arranged in an axial edge region (523, 623a, 623b) of the incision (514, 614, 714).

4. A workpiece according to anyone of the preceding claims, **characterized in that** the incision (14, 114, 214, 314,414, 514, 614, 714, 814) has a depth (15) between 0.5 and 2 mm.

5. A workpiece according to anyone of the preceding claims, **characterized in that** the incision (14, 114, 214, 314,414, 514, 614, 714, 814) has a height in the axial direction between 5 and 50 mm.

6. A workpiece according to claim 1, **characterized in that** only the first layer (221, 321, 421, 621) forms the running surface (218).

7. A workpiece according to claim 1, **characterized in that** the first layer (821) and otherwise the second layer (822) forms the running surface (818) in the area of the incision (814).

8. A workpiece according to anyone of the claims 1, 6 or 7, **characterized in that** the second layer (222, 322, 422, 622, 722, 822) is made of a ceramic material.

9. A workpiece according to anyone of the claims 1, 6, 7 or 8, **characterized in that** the second layer (222, 322, 422, 622, 722, 822) has a thickness between 0.5 and 2 mm.

10. A workpiece according to anyone of the claims 1 to 9, **characterized in that** the coating (17, 117, 217, 317, 417, 517, 617) is applied by a thermal spraying process.

11. A workpiece according to claim 10, **characterized in that** the coating (17, 117, 217, 317, 417, 517, 617) is applied by plasma spraying.

## Revendications

1. Une pièce à usiner avec un corps de base (11, 111, 211), qui a un évidement (12a, 12b, 112, 212, 312, 412, 612) pour recevoir un piston (19) alternatif le long d'une direction axiale (13), l'évidement (12a, 12b, 112, 212, 312, 412, 612) ayant un revêtement (17, 117, 217, 317, 417, 517, 617), qui forme une surface de roulement (18, 118, 218, 818) pour le piston (19) et la surface de roulement (18, 118, 218, 818) est conçu sous la forme d'un cylindre creux, dans lequel l'évidement (12a, 12b, 112, 212, 312, 412, 612) du corps de base (11, 111, 211) a une forme différente d'une forme cylindrique creuse dans la région de la surface de roulement (18, 118, 218, 818) et le revêtement (217, 317, 417, 617) a une première couche (221, 321, 421, 621, 821) et une seconde couche (222, 322, 422, 622, 722, 822), dans lequel la première couche (221, 321, 421, 621, 821) est disposée au-dessus de la seconde couche (222, 322, 422, 622, 722, 822) au moins par sections, et l'évidement (12a, 12b, 112, 212, 312, 412, 612) du corps de base (11, 111, 211) a une forme de base cylindrique creuse, **caractérisé en ce que** l'évidement (12a, 12b, 112, 212, 312, 412, 612) du corps de base (11, 111, 211) a au moins une incision (14, 114, 214, 314, 414, 514, 614, 714, 814) dans la direction radiale, dans lequel l'incision (14, 114, 214, 314, 414, 514, 614, 714, 814) est complètement circonférentielle.

2. Une pièce à usiner selon la revendication 1, **caractérisé en ce que** l'incision (514, 614, 714) est de différentes profondeurs.

3. Une pièce à usiner selon la revendication 1 ou 2, **caractérisé en ce que** l'incision (514, 614, 714) a une cavité (524, 624a, 624b), qui est disposée dans une région de bord axial (523, 623a, 623b) de l'incision (514, 614, 714).

4. Une pièce à usiner selon l'une des revendications précédentes, **caractérisé en ce que** l'incision (14, 114, 214, 314, 414, 514, 614, 714, 814) a une profondeur (15) entre 0.5 et 2 mm.

5. Une pièce à usiner selon l'une des revendications précédentes, **caractérisé en ce que** l'incision (14, 114, 214, 314, 414, 514, 614, 714, 814) a une hauteur (16) dans la direction axiale entre 5 et 50 mm.

6. Une pièce à usiner selon la revendication 1, **caractérisé en ce que** seulement la première couche (221, 321, 421, 621) forme la surface de roulement (218).

7. Une pièce à usiner selon la revendication 1, **caractérisé en ce que** dans la zone de l'incision (814), la première couche (821) et sinon la deuxième couche (822) forme la surface de roulement (818).

8. Une pièce à usiner selon l'une des revendications 1, 6 ou 7, **caractérisé en ce que** la deuxième couche (222, 322, 422, 622, 722, 822) se compose d'un matériau céramique.

9. Une pièce à usiner selon l'une des revendications 1, 6, 7 ou 8, **caractérisé en ce que** la deuxième couche (222, 322, 422, 622, 722, 822) a une épaisseur entre 0.5 et 2mm.

10. Une pièce à usiner selon l'une des revendications 1 à 9, **caractérisé en ce que** le revêtement (17, 117, 217, 317, 417, 517, 617) est appliqué par un procédé de projection thermique.

11. Une pièce à usiner selon la revendication 10, **caractérisé en ce que** le revêtement (17, 117, 217, 317, 417, 517, 617) est appliqué par un procédé de pulvérisation au plasma.
